# EUROPEAN PATENT SPECIFICATION

(11) **EP 3 285 508 B1**
(45) Date of publication and mention of the grant of the patent: **03.04.2019**
(21) Application number: 15892932.3
(22) Date of filing: 27.05.2015
(51) Int. Cl.: H04W 4/06, H04W 4/00, H04W 48/10, H04W 72/00, H04W 72/04, H04W 72/12

(54) **OBTAINING AND DETERMINING METHOD OF SYSTEM MESSAGE AND TERMINAL DEVICE THEREOF**
VERFAHREN ZUM ERHALTEN UND ZUR BESTIMMEN EINER SYSTEMNACHRICHT UND ENDGERÄTEVORRICHTUNG DAFÜR
PROCÉDÉ D'OBTENTION ET DE DÉTERMINATION DE MESSAGE DE SYSTÈME ET DISPOSITIF DE TERMINAL ASSOCIÉ

(43) Date of publication of application: 21.02.2018
(60) Divisional application: 19157744.4
(73) Proprietor: Huawei Technologies Co. Ltd., Shenzhen, Guangdong 518129 (CN)
(72) Inventor: YU, Yinghui, Shenzhen Guangdong 518129 (CN); WANG, Juan, Shenzhen Guangdong 518129 (CN)
(74) Representative: Maiwald Patent- und Rechtsanwaltsgesellschaft mbH
(86) International application number: PCT/CN2015/079978
(87) International publication number: WO 2016/187851

(56) References cited:
- WO-A1-2014/098402
- CN-A- 101 969 602
- CN-A- 102 300 157
- CN-A- 103 052 136
- GB-A- 2 509 162
- US-A1- 2015 105 109

## Description

### TECHNICAL FIELD

The present invention relates to the field of communications technologies, and in particular, to a system message acquisition determining method and a terminal device.

### BACKGROUND

A machine type communication (Machine Type Communication, MTC) technology is a technology in which information and data are transmitted between machines by using a wireless network, and is also referred to as a machine-to-machine (Machine-to-Machine, M2M) technology. A network in which data is transmitted between machines by using the M2M technology is referred to as an M2M system.

In a wireless communications system, a base station broadcasts a system message. The system message includes various types of parameters required by a terminal device. The terminal device obtains these parameters, to perform a corresponding operation, such as cell selection/reselection, camping, or call initiation. Therefore, reliability of the system message affects performance of an entire network.

The system message includes a master information block (Master Information Block, MIB), system information blocks 1 to 9 (System Information Block, SIB), and the like. In an M2M system, the system message is sent on two dedicated channels. SIB1 is sent on a physical broadcast and synchronization channel (Physical broadcast and synchronization channel, PBSCH), and other system messages are sent on an extended physical broadcast channel (Extended physical broadcast channel, EPBCH). SIB1 carries a value tag that indicates a system message change. A terminal device in an M2M system is usually in a sleep state for a long time to reduce power consumption. After the terminal device awakes in a paging period, the terminal device synchronizes with a network side first. On one hand, the terminal device first reads a system message and then reads a paging message in a paging period; on the other hand, the terminal device measures a serving cell based on a synchronization signal. A synchronization signal sent by a base station is also transmitted on a PBSCH.

However, in the M2M system, if the foregoing manner is used to obtain the system message, the terminal device needs to read the system message once when the terminal device awakes in each paging period. However, a sum of time periods used by the terminal device to synchronize with the network side, read the system message, and measure the serving cell is excessively long, and may be longer than the paging period. As a result, a time period of the terminal device in the sleep state in each paging period becomes shorter, and power consumption of the terminal device is relatively high.

In conclusion, in an M2M system, a current system message receiving manner, that is, a manner in which a terminal awakes in each paging period to read a system message once, is adverse to power consumption reduction of the terminal. GB 2509162 discloses telecommunications apparatus and method and in particular discloses that signalling eNodeB communication parameters/capabilities is performed by using particular pilot reference signal parameters.
WO 2014098402 A1 relates to devices and methods for transmitting/receiving information such as a master information block (MIB) and system information block (SIB) on the basis of a DMRS.

### SUMMARY

The invention is defined by the subject matter of the independent claims. Advantageous enhancements are subject to the dependent claims.

### BRIEF DESCRIPTION OF DRAWINGS

FIG. 1 is a flowchart of a system message acquisition determining method according to an embodiment of the present invention;
FIG. 2 is a schematic diagram of a manner of reading a system message according to an embodiment of the present invention;
FIG. 3 is a schematic structural diagram of a broadcast information block 1 transmitted on PBSCH according to an embodiment of the present invention;
FIG. 4 is a schematic structural diagram of a broadcast information block transmitted on EPBCH according to an embodiment of the present invention;
FIG. 5 is a specific flowchart of a system message acquisition determining method according to an embodiment of the present invention;
FIG. 6 is a schematic structural diagram of a terminal device according to an embodiment of the present invention; and
FIG. 7 is a structural diagram of a terminal device according to an embodiment of the present invention.

### DESCRIPTION OF EMBODIMENTS

Embodiments of the present invention provide a system message acquisition determining method and a terminal device, so as to resolve a problem that a prior-art system message acquisition manner causes relatively high power consumption of the terminal device. The method and the terminal device are based on a same inventive concept. Because principles for resolving a problem for the method and the terminal device are similar, for implementations of the terminal device and the method, reference may be made to each other, and repetition is not described.

In the prior art, a terminal device needs to read a system message once when the terminal device awakes in each paging period. However, a time period used by the terminal device to synchronize with a network side, read the system message, and measure a serving cell is excessively long, and may be longer than the paging period. As a result, a time period of the terminal device in a sleep state in each paging period becomes shorter, and power consumption of the terminal device is relatively high. By using the technical solutions in the embodiments of the present invention, a terminal device determines, according to a result of decoding received downlink control information (Downlink Control Information, DCI), whether to read a system message sent by a base station. In this way, the terminal device may not need to read the system message in some paging periods. This reduces a quantity of times of reading the system message, and further reduces power consumption of the terminal device, and prolongs a standby time period of the terminal device. In addition, by using this system message acquisition mechanism, whether to trigger system message acquisition is determined according to the result of decoding the DCI, and this ensures timeliness and accuracy of the system message acquisition.

The embodiments of the present invention provide a system message acquisition determining method and a terminal device, and can be applied to various terminal devices in an M2M system, such as a mobile phone, a meter in a smart metering system, and a sensor. Preferred implementations of the present invention are described below in detail with reference to accompanying drawings.

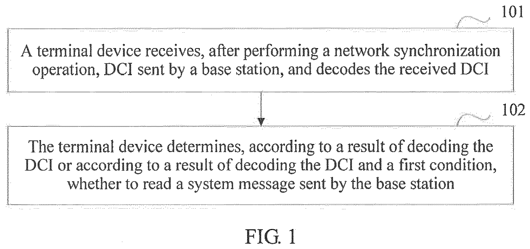

A system message acquisition determining method provided in an embodiment of the present invention may be used in but is not limited to an LTE system. Referring to FIG. 1, a specific procedure of the method includes the following steps.

Step 101: A terminal device receives, after performing a network synchronization operation, DCI sent by a base station, and decodes the received DCI.

Specifically, when the terminal device awakes in each paging period, the terminal device needs to synchronize with a network side first, that is, the terminal device performs a network synchronization operation. In this way, the terminal device can normally receive, in a timely manner, the DCI sent by the base station.

In an M2M system, the base station periodically sends the DCI on a physical downlink shared channel (Physical Downlink Shared Channel, PDSCH). The DCI carries resource scheduling information and other control information that are of the terminal device, such as uplink or downlink resource scheduling information.

Configuration information of the DCI, such as a bearer channel of the DCI, a sending period of the DCI, a modulation and coding scheme (modulation and coding scheme, MCS) of the DCI, and other information, is carried in a system message.

Optionally, the DCI received by the terminal device includes a paging radio network temporary identifier (Paging-Radio Network Temporary Identity, P-RNTI) that indicates a paging message.

Step 102: The terminal device determines, according to a result of decoding the DCI or according to a result of decoding the DCI and a first condition, whether to read a system message sent by the base station.

Specifically, during execution of step 102, according to the result of decoding the DCI, when any one of the following trigger conditions is met, it is determined to read the system message sent by the base station:

First trigger condition: When the result of decoding the DCI is a failure, the terminal device determines to read the system message sent by the base station.

Second trigger condition: When the result of decoding the DCI is a success, and the first condition is: it is determined that resource scheduling information obtained by decoding the DCI does not include a P-RNTI, the terminal device determines to read the system message sent by the base station.

Third trigger condition: When the result of decoding the DCI is a success, and the first condition is: it is determined that resource scheduling information obtained by decoding the DCI includes a P-RNTI, and the terminal device determines, after receiving a paging message based on the P-RNTI and successfully decoding the paging message, that the decoded paging message includes a device identifier of the terminal device, the terminal device determines to read the system message sent by the base station.

In the first trigger condition, the result of decoding the DCI is a failure. The failure may be caused by a system message change. For example, the DCI decoding failure is caused by a change of the configuration information of the DCI. Therefore, the system message sent by the base station needs to be re-read, so that the terminal device can re-receive the DCI according to the configuration information of the DCI of the re-read system message.

In the second trigger condition, the result of decoding the DCI is a success, but the resource scheduling information obtained by decoding the DCI does not include a P-RNTI. This case may also be caused by a system message change. Therefore, the terminal device needs to read the system message sent by the base station, so that the terminal device can re-receive the DCI according to the re-read system message, and decode the DCI.

In the third trigger condition, the result of decoding the DCI is a success, and the resource scheduling information obtained by decoding the DCI includes a P-RNTI, and the terminal device determines, after receiving a corresponding paging message based on the P-RNTI and successfully decoding the paging message, that the paging message includes the device identifier of the terminal device. This case indicates that the paging message is sent for the terminal device. In this case, the terminal device needs to respond by sending a random access request to the network side. However, before sending the random access request, the terminal device needs to re-read the system message, and determines that the obtained system message is a latest system message, so as to avoid a random access failure caused by a system message change. Optionally, the device identifier of the terminal device may be a system-temporary mobile station identity (System-Temporary Mobile Station Identity, S-TMSI).

Specifically, during execution of step 102, according to a result of decoding the DCI, when the following trigger condition is met, it is determined not to read a system message sent by the base station:
When the result of decoding the DCI is a success, and the first condition is: it is determined that resource scheduling information obtained by decoding the DCI includes a P-RNTI, and the terminal device determines, after receiving a paging message based on the P-RNTI and successfully decoding the paging message, that the decoded paging message does not include a device identifier of the terminal device, it is determined not to read the system message sent by the base station.

After the paging message is successfully decoded, and when it is determined that the paging message does not include the device identifier of the terminal device, it indicates that the paging message is not sent for the terminal device. In this case, the terminal device does not need to respond by sending a random access request to the network side, and therefore, does not need to re-read the system message, either.

Optionally, after the terminal device receives the paging message based on the P-RNTI and decodes the paging message, the method further includes:
if the terminal device fails to decode the paging message, receiving, by the terminal device, next DCI sent by the base station.

Optionally, the base station sends the DCI at a specified discontinuous reception (Discontinuous Reception, DRX) period. Therefore, if failing to decode the paging message, the terminal device may receive the DCI sent by the base station in a next DRX period.

Optionally, the system message includes SIB1, SIB2, SIB3, SIB4, and SIB5, or includes SIB1, SIB2, SIB3, and SIB4. Content of the system message is as follows:
SIB1: receiving information of the terminal device and scheduling information of another system message.
SIB2: radio resource configuration information.
SIB3: cell reselection common information.
SIB4: information about an adjacent cell for intra-frequency cell reselection.
SIB5: inter-frequency cell reselection information.

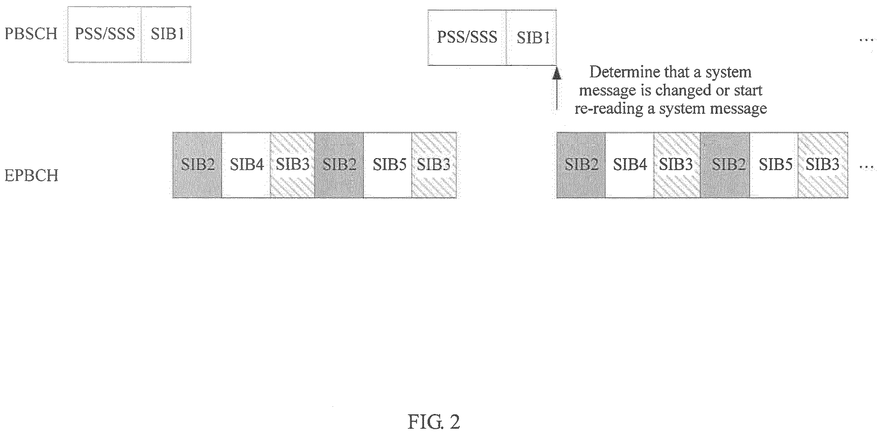

Specifically, the system message sent by the base station is read in the following two reading manners:
First manner: reading SIB1 in the system message sent by the base station, and reading system messages SIB2, SIB3, SIB4, and SIB5 or SIB2, SIB3, and SIB4 other than SIB1 according to SIB1.
   The reading system messages other than SIB1 according to SIB1 includes:
   determining, according to a system message change value tag value tag carried in SIB1, whether the system message is changed; and
   when it is determined that the system message is changed, reading changed system messages SIB2, SIB3, SIB4, and SIB5 or SIB2, SIB3, and SIB4 other than SIB1.
Second manner: first reading SIB1 in the system message sent by the base station, and then reading system messages SIB2, SIB3, SIB4, and SIB5 or SIB2, SIB3, and SIB4 other than SIB1, as shown in FIG. 2.

In the second manner, the terminal device reads the system message according to its own requirement. Therefore, when reading the system message in this manner, the terminal device may read all system messages, or may read only some system messages. For example, during cell reselection, only SIB1, SIB2, SIB3, and SIB4 need to be read.

In the foregoing two manners, the reading SIB1 in the system message sent by the base station includes: reading SIB1 in the system message on a PBSCH.

The reading system messages other than SIB1 includes: reading the system messages other than SIB1 on an EPBCH.

In an actual application scenario, in a narrowband system, frequency domain spread spectrum and time domain repetition are usually used to extend a coverage area. For a common coverage area A, spread spectrum and repetition processing do not need to be performed. For extended coverage areas B and C, different frequency spreading and repetition times may be specified for processing, for example, 8 times and 64 times. In different coverage areas, the terminal device has different coverage levels. With different coverage levels, the terminal device performs data transmission on different data channels PDSCHs. When the terminal device receives the system message at each coverage level, the terminal device sets corresponding largest quantities of reading times for reading SIB1, SIB2-SIB5, and SIB2-SIB4. In this way, each time when the terminal device reads the system message, actual quantities of times of reading SIB1, SIB2-SIB5, and SIB2-SIB4 are less than or equal to the corresponding largest quantities of reading times. A largest quantity of reading times for reading SIB1 is a first specified quantity of times, a largest quantity of reading times for reading SIB2-SIB5 is a second specified quantity of times, and a largest quantity of reading times for reading SIB2-SIB5 is a third specified quantity of times.

In the first manner, when reading a system message, a UE cannot receive system messages on the PBSCH and EPBCH at the same time. Therefore, the terminal device first reads SIB1 on the PBSCH, and then reads system messages on the EPBCH after successfully decoding SIB1. When first receiving SIB1 or system messages other than SIB1, the terminal device at a low coverage level may fail to decode SIB1 or the system messages. Therefore, multiple times of reading are needed, and combined decoding is performed on previously read system messages and those read at the multiple times. Specifically, after the reading SIB1 in the system message sent by the base station, and before the reading system messages other than SIB1 according to SIB1, the method includes:
decoding the read SIB1; and if the decoding fails, continuing with next reading of SIB1 in the system message sent by the base station, and performing combined decoding on SIB1 obtained from the next reading and previously read SIB1, ending with successful decoding.

Likewise, the reading SIB2-SIB5 or SIB2-SIB4 according to SIB1 includes:
decoding the read SIB2-SIB5 or SIB2-SIB4; and if the decoding fails, continuing with next reading of SIB2-SIB5 or SIB2-SIB4, and performing combined decoding on SIB2-SIB5 or SIB2-SIB4 obtained from the next reading and previously read SIB2-SIB5 or SIB2-SIB4, ending with successful decoding on SIB2-SIB5 or SIB2-SIB4.

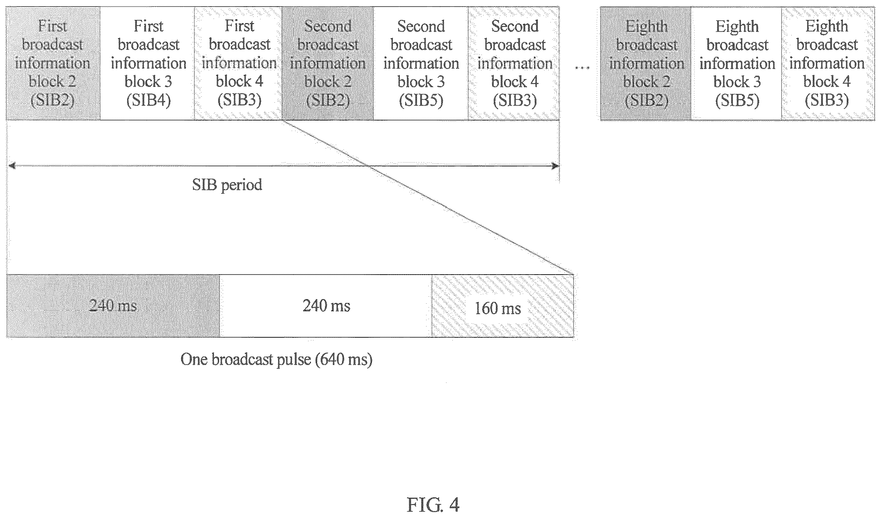

A quantity of times of reading SIB1 is less than or equal to the first specified quantity of times, a quantity of times of reading SIB2-SIB5 is less than or equal to the second specified quantity of times, and a quantity of times of reading SIB2-SIB4 is less than or equal to the third specified quantity of times. Referring to FIG. 4, SIB2-SIB5 are read once, that is, two broadcast pulses are read in one SIB period, including two SIB2, two SIB3, one SIB4, and one SIB5.

Optionally, a change period of the system message that is read by the terminal device and sent by the base station is 5.12 seconds.

The terminal device reads the system message when the change period of the system message begins. This ensures that the system message read in a current change period is not changed, so as to avoid a soft combination failure caused by reading the system message for multiple times.

When the change period of the system message is not 5.12 seconds, or the terminal device does not read the system message when the change period, 5.12 seconds, of the system message begins, or the system message constantly changes, the system message is changed when the terminal device at a low coverage level reads SIB1 or SIB2-SIB5 or SIB2-4 for multiple times. Consequently, combined decoding on the system message fails.

In this embodiment of the present invention, the reading the system message sent by the base station includes:
reading the system message sent by the base station once, and when determining that the system message fails to be read this time, triggering next reading of the system message sent by the base station.

This system message reading failure may be caused by a soft combination failure resulted from a system message change or a combined decoding failure. If combined decoding fails for at least two times, it may be considered that a soft combination fails.

Specifically, the determining that the system message fails to be read this time includes:
reading SIB1 for a first specified quantity of times, and determining that decoding on SIB1 read at the first time fails, and combined decoding on SIB1 read at each subsequent time and previously read SIB1 fails; or
when the system message includes SIB5, reading SIB2, SIB3, SIB4, and SIB5 for a second specified quantity of times, and determining that decoding on SIB2, SIB3, SIB4, and SIB5 read at the first time fails, and combined decoding on SIB2, SIB3, SIB4, and SIB5 read at each subsequent time and previously read SIB2, SIB3, SIB4, and SIB5 fails; or
when the system message does not include SIB5, reading SIB2, SIB3, and SIB4 for a third specified quantity of times, and determining that decoding on SIB2, SIB3, and SIB4 read at the first time fails, and combined decoding on SIB2, SIB3, and SIB4 read at each subsequent time and previously read SIB2, SIB3, and SIB4 fails.

Specifically, in this embodiment of the present invention, SIB1 not only can carry a value tag, but also can carry various cell information such as a cell ID, cell access restriction information, access control information, and cell selection information.

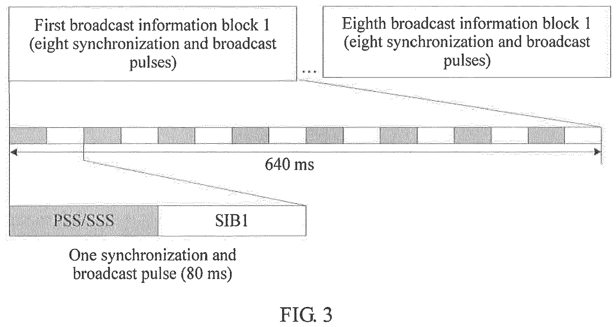

The PBSCH not only can transmit SIB1, but also can transmit a primary synchronization signal (Primary Synchronized Signal, PSS)/secondary synchronization signal (Secondary Synchronization Signal, SSS). Referring to FIG. 3,

FIG. 3 shows a format of one broadcast information block 1 transmitted on a PBSCH. A time period for receiving each broadcast information block 1 by the terminal device is 640 milliseconds. Each broadcast information block 1 includes eight synchronization and broadcast pulses, and therefore, a time period for receiving each synchronization and broadcast pulse is 80 milliseconds. Each synchronization and broadcast pulse includes SIB1 and the PSS/SSS, that is, eight times of spread spectrum are performed on SIB1 in one broadcast information block 1. The PBSCH can send eight consecutive broadcast information blocks 1. Therefore, when the terminal device at a low coverage level fails to decode SIB1 and continues with next reading of SIB1 for combined decoding, the terminal device can read SIB1 for a maximum of eight times. Therefore, the first specified quantity of times is a positive integer less than or equal to 8, and a specific value of this quantity may be set according to actual applications.

Referring to FIG. 4, when the EPBCH transmits system messages other than SIB1, three different broadcast information blocks are used to transmit SIB2-SIB5. A broadcast information block 2 includes SIB2, and a broadcast information block 4 includes SIB3. When SIB5 is included, SIB4 and SIB5 multiplex a broadcast information block 3. Each broadcast pulse includes one broadcast information block 2, one broadcast information block 3, and one broadcast information block 4. A time period for receiving each broadcast pulse by the terminal device is 640 milliseconds. In this case, the system messages other than SIB1 are all received at least once, and this is called a SIB period. The EPBCH can send eight consecutive broadcast pulses, that is, four SIB periods. Therefore, with SIB5 included in the system message, when the terminal device at a low coverage level fails to decode the system messages other than SIB1 and continues with next reading of the system messages for combined decoding, the terminal device can read the system messages other than SIB1 for a maximum of eight times. Therefore, the third specified quantity of times is a positive integer less than or equal to 8, and a specific value of this quantity may be set according to actual applications. With SIB5 not included in the system message, when the terminal device at a poor coverage level fails to decode the system messages other than SIB1 and continues with next reading of the system messages for combined decoding, the terminal device can perform reading in a maximum of four SIB periods, that is, read SIB2 and SIB3 for a maximum of eight times and read SIB4 and SIB5 for a maximum of four times. Therefore, the second specified quantity of times is a positive integer less than or equal to 4, and a specific value of this quantity may be set according to actual applications.

It can be learned from the foregoing descriptions of the system message that, a maximum period for receiving each system message is 640 milliseconds × 8 = 5.12 seconds. Therefore, the change period of the system message may further be set to 5.12 seconds. This can ensure that the system message is not changed during the maximum period for receiving each system message. Therefore, a soft combination failure of the system message is avoided, and correctness of receiving the system message is ensured.

By using the technical solution in this embodiment of the present invention, a terminal device determines, according to a result of decoding received DCI or according to a result of decoding received DCI and a first condition, whether to read a system message sent by a base station. In this way, the terminal device may not need to read the system message in some paging periods. This reduces a quantity of times of reading the system message, and further reduces power consumption of the terminal device, and prolongs a standby time period of the terminal device. In addition, by using this system message acquisition mechanism, whether to trigger system message acquisition is determined according to the result of decoding the DCI, and this ensures timeliness and accuracy of the system message acquisition.

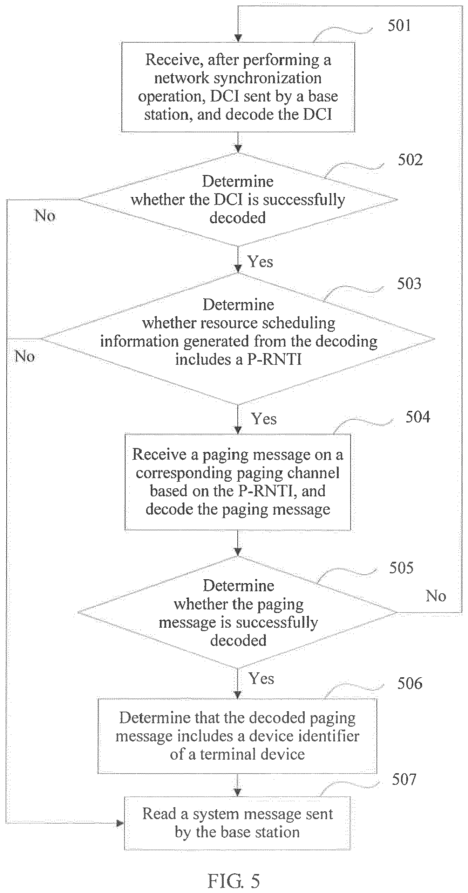

Based on the foregoing embodiment, referring to FIG. 5, an embodiment of the present invention further provides a specific procedure of a system message acquisition determining method, which is applied to various terminal devices in an M2M system. The specific procedure includes the following steps.

Step 501: A terminal device receives, after performing a network synchronization operation, DCI sent by a base station, and decodes the DCI.

Before reading the DCI sent by the base station, the terminal device first needs to synchronize with a network side, that is, the terminal device performs a network synchronization operation. In this way, the terminal device can normally receive the DCI in a timely manner.

The terminal device needs to receive the DCI carried on a PDSCH. The DCI is used to receive resource scheduling information and other control information sent by the base station. Optionally, the DCI includes a paging indication identifier P-RNTI.

Step 502: Determine whether the DCI is successfully decoded, where if the DCI is successfully decoded, step 503 is performed; or if the DCI fails to be decoded, step 507 is performed.

Specifically, after the DCI is successfully decoded, whether to continue to read the system message further needs to be determined according to resource scheduling information generated from the decoding. A DCI decoding failure may be caused by a system message sending change. Therefore, the terminal device needs to read the system message, determines that a correct system message is obtained, re-receives the DCI according to the correct system message, and decodes the DCI.

Step 503: Determine whether resource scheduling information generated from the decoding includes a P-RNTI, where if the resource scheduling information includes a P-RNTI, step 504 is performed; or if the resource scheduling information does not include a P-RNTI, step 507 is performed.

When the DCI is successfully decoded, and the obtained resource scheduling information includes a P-RNTI, the terminal device may receive a paging message on a corresponding paging channel. When the generated resource scheduling information does not include a P-RNTI, it indicates that the resource scheduling information obtained from the decoding does not indicate a paging message for the terminal device. The terminal device cannot receive a paging message, and this may be caused by a system message change. Therefore, the terminal device needs to read the system message sent by the base station, so that the terminal device re-receives the DCI according to the re-read system message and decodes the DCI.

Step 504: Receive a paging message on a corresponding paging channel based on the P-RNTI, and decode the paging message.

Step 505: Determine whether the paging message is successfully decoded, where if the paging message is successfully decoded, step 506 is performed; or if the paging message fails to be decoded, step 501 is performed.

When the paging message fails to be decoded, re-reading of the DCI sent by the base station in a next DRX period is triggered. When the paging message is successfully decoded, the system message sent by the base station continues to be read according to the decoded paging message.

Step 506: Determine that the decoded paging message includes a device identifier of the terminal device.

After the paging message is successfully decoded, when it is determined that the paging message includes the device identifier of the terminal device, it indicates that the paging message is sent for the terminal device. In this case, the terminal device needs to respond by sending a random access request to the network side. However, before sending the random access request, the terminal device needs to re-read the system message, and determines that the obtained system message is a latest system message. Optionally, the device identifier of the terminal device may be an S-TMSI.

Step 507: Read the system message sent by the base station.

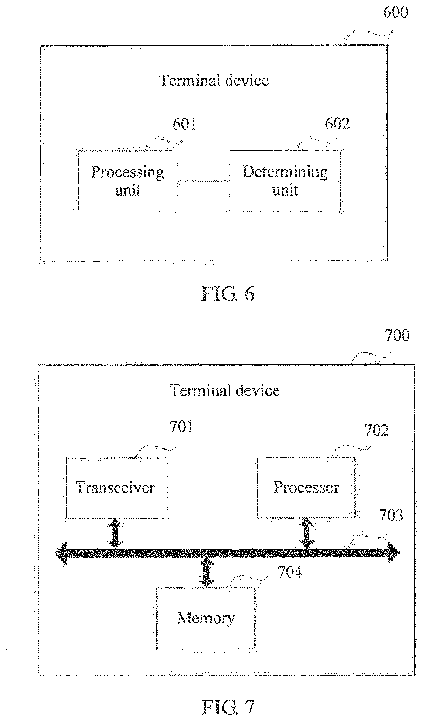

Based on the foregoing embodiments, referring to FIG. 6, an embodiment of the present invention further provides a terminal device. The terminal device 600 includes a processing unit 601 and a determining unit 602.

The processing unit 601 is configured to: receive, after performing a network synchronization operation, downlink control information DCI sent by a base station, and decode the received DCI.

The determining unit 602 is configured to determine, according to a result of decoding the DCI by the processing unit 601 or according to a result of decoding the DCI by the processing unit 601 and a first condition, whether to read a system message sent by the base station.

Optionally, when determining, according to the result of decoding the DCI, to read the system message sent by the base station, the determining unit 602 is configured to:
when the result of decoding the DCI is a failure, determine to read the system message sent by the base station.

Optionally, when determining, according to the result of decoding the DCI and the first condition, to read the system message sent by the base station, the determining unit 602 is configured to:
when the result of decoding the DCI is a success, and the first condition is: it is determined that resource scheduling information obtained by decoding the DCI does not include a paging radio network temporary identifier P-RNTI, determine to read the system message sent by the base station; or
when the result of decoding the DCI is a success, and the first condition is: it is determined that resource scheduling information obtained by decoding the DCI includes a P-RNTI, and the terminal device determines, after receiving a paging message based on the P-RNTI and successfully decoding the paging message, that the decoded paging message includes a device identifier of the terminal device, determine to read the system message sent by the base station.

Optionally, when determining, according to the result of decoding the DCI and the first condition, not to read the system message sent by the base station, the determining unit 602 is configured to:
when the result of decoding the DCI is a success, and the first condition is: it is determined that resource scheduling information obtained by decoding the DCI includes a P-RNTI, and the terminal device determines, after receiving a paging message based on the P-RNTI and successfully decoding the paging message, that the decoded paging message does not include a device identifier of the terminal device, determine not to read the system message sent by the base station.

Optionally, the processing unit 601 is further configured to:
if the determining unit 602 fails to decode the paging message, receive next DCI sent by the base station.

Optionally, when receiving the next DCI sent by the base station, the processing unit 601 is configured to:
receive the DCI sent by the base station in a next discontinuous reception DRX period.

Optionally, the determining unit 602 is further configured to:
after determining to read the system message sent by the base station, read a system message that is sent by the base station and whose change period is 5.12 seconds.

Optionally, the determining unit 602 is further configured to:
after determining to read the system message sent by the base station, read the system message sent by the base station, where the reading includes:
reading the system message sent by the base station once, and when determining that the system message fails to be read this time, triggering next reading of the system message sent by the base station.

Optionally, the determining unit 602 is configured to:
read a system message that is sent by the base station and includes system information blocks SIB1, SIB2, SIB3, SIB4, and SIB5, or read a system message that is sent by the base station and includes SIB1, SIB2, SIB3, and SIB4.

When determining that the system message fails to be read this time, the determining unit 602 is configured to:
read SIB1 for a first specified quantity of times, and determine that decoding on SIB1 read at the first time fails, and combined decoding on SIB1 read at each subsequent time and previously read SIB1 fails; or
when the system message includes SIB5, read SIB2, SIB3, SIB4, and SIB5 for a second specified quantity of times, and determine that decoding on SIB2, SIB3, SIB4, and SIB5 read at the first time fails, and combined decoding on SIB2, SIB3, SIB4, and SIB5 read at each subsequent time and previously read SIB2, SIB3, SIB4, and SIB5 fails; or
when the system message does not include SIB5, read SIB2, SIB3, and SIB4 for a third specified quantity of times, and determine that decoding on SIB2, SIB3, and SIB4 read at the first time fails, and combined decoding on SIB2, SIB3, and SIB4 read at each subsequent time and previously read SIB2, SIB3, and SIB4 fails.

Based on the foregoing embodiments, referring to FIG. 7, an embodiment of the present invention further provides a terminal device. A terminal device 700 includes a transceiver 701, a processor 702, a bus 703, and a memory 704.

The transceiver 701, the processor 702, and the memory 704 are interconnected by using the bus 703. The bus 703 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of illustration, only one bold line is used in FIG. 7 to represent the bus, which, however, does not mean there is only one bus or only one type of bus.

The transceiver 701 is configured to communicate with a base station, receive DCI, and read a system message, a paging message, and the like.

The processor 702 is configured to implement the system message acquisition determining method shown in FIG. 1 in the embodiment of the present invention. The method includes:
receiving, after performing a network synchronization operation, DCI sent by the base station, and decoding the received DCI; and
determining, according to a result of decoding the DCI or according to a result of decoding the DCI and a first condition, whether to read a system message sent by the base station.

Optionally, the determining, according to a result of decoding the DCI, to read a system message sent by the base station includes:
when the result of decoding the DCI is a failure, determining to read the system message sent by the base station.

Optionally, the determining, according to a result of decoding the DCI and a first condition, to read a system message sent by the base station includes:
when the result of decoding the DCI is a success, and the first condition is: it is determined that resource scheduling information obtained by decoding the DCI does not include a paging radio network temporary identifier P-RNTI, determining to read the system message sent by the base station; or
when the result of decoding the DCI is a success, and the first condition is: it is determined that resource scheduling information obtained by decoding the DCI includes a P-RNTI, and the processor 702 determines, after a paging message is received based on the P-RNTI and is successfully decoded, that the decoded paging message includes a device identifier of the terminal device 700, determining to read the system message sent by the base station.

Optionally, the determining, according to a result of decoding the DCI and a first condition, not to read a system message sent by the base station includes:
when the result of decoding the DCI is a success, and the first condition is: it is determined that resource scheduling information obtained by decoding the DCI includes a P-RNTI, and the processor 702 determines, after a paging message is received based on the P-RNTI and is successfully decoded, that the decoded paging message does not include a device identifier of the terminal device 700, determining not to read the system message sent by the base station.

Optionally, the method further includes:
if the terminal device fails to decode the paging message, receiving next DCI sent by the base station.

Optionally, the DCI is sent by the base station in a next discontinuous reception DRX period.

Optionally, after the determining to read the system message sent by the base station, the method further includes:
reading a system message that is sent by the base station and whose change period is 5.12 seconds.

Optionally, after the determining to read the system message sent by the base station, the method further includes: reading the system message sent by the base station, including:
reading the system message sent by the base station once, and when determining that the system message fails to be read this time, triggering next reading of the system message sent by the base station.

Optionally, the system message includes system information blocks SIB1, SIB2, SIB3, SIB4, and SIB5, or includes SIB1, SIB2, SIB3, and SIB4.

The determining that the system message fails to be read this time includes:
reading SIB1 for a first specified quantity of times, and determining that decoding on SIB1 read at the first time fails, and combined decoding on SIB1 read at each subsequent time and previously read SIB1 fails; or
when the system message includes SIB5, reading SIB2, SIB3, SIB4, and SIB5 for a second specified quantity of times, and determining that decoding on SIB2, SIB3, SIB4, and SIB5 read at the first time fails, and combined decoding on SIB2, SIB3, SIB4, and SIB5 read at each subsequent time and previously read SIB2, SIB3, SIB4, and SIB5 fails; or
when the system message does not include SIB5, reading SIB2, SIB3, and SIB4 for a third specified quantity of times, and determining that decoding on SIB2, SIB3, and SIB4 read at the first time fails, and combined decoding on SIB2, SIB3, and SIB4 read at each subsequent time and previously read SIB2, SIB3, and SIB4 fails.

The terminal device 700 further includes the memory 704, configured to store a program and the like. Specifically, the program may include program code, where the program code includes a computer operation instruction. The memory 704 may include a random access memory (random access memory, RAM), and may further include a non-volatile memory (non-volatile memory), for example, at least one magnetic disk storage. The processor 702 performs the application program stored in the memory 704, and implements the system message acquisition method above.

In conclusion, according to the system message acquisition method and the terminal device provided in the embodiments of the present invention, the terminal device determines, according to a result of decoding received DCI or according to a result of decoding received DCI and a first condition, whether to read a system message sent by a base station. In this way, the terminal device may not need to read the system message in some paging periods. This reduces a quantity of times of reading the system message, and further reduces power consumption of the terminal device, and prolongs a standby time period of the terminal device. In addition, by using this system message acquisition mechanism, whether to trigger system message acquisition is determined according to the result of decoding the DCI, and this ensures timeliness and accuracy of the system message acquisition.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims.

## Claims

1. A method for determining a system message acquisition, comprising:
receiving (101), by a terminal device after performing a network synchronization with a network side, downlink control information, DCI, sent by a base station, and decoding the received DCI; and
determining (102), by the terminal device according to (i) a result of decoding the DCI and (ii) a first condition to read a system message sent by the base station;
wherein the result of decoding the DCI is that (i) the DCI has been successfully decoded; and
wherein the first condition is that:
(ii) it is determined that resource scheduling information obtained by decoding the DCI comprises a P-RNTI, and the terminal device determines, after receiving a paging message based on the P-RNTI and successfully decoding the paging message, that the decoded paging message comprises a device identifier of the terminal device.

2. The method according to claim 1, wherein the method further comprises:
if the terminal device fails to decode the paging message, receiving, by the terminal device, next DCI sent by the base station.

3. The method according to claim 2, wherein the DCI is sent by the base station in a next discontinuous reception DRX period.

4. The method according to claim 1, wherein after the determining, by the terminal device, to read the system message sent by the base station, the method further comprises:
reading a system message that is sent by the base station and whose change period is 5.12 seconds.

5. The method according to claim 1, wherein after the determining, by the terminal device, to read the system message sent by the base station, the method further comprises: reading the system message sent by the base station, comprising:
reading the system message sent by the base station once, and when determining that the system message fails to be read this time, triggering next reading of the system message sent by the base station.

6. The method according to claim 5, wherein the system message comprises system information blocks SIB1, SIB2, SIB3, SIB4, and SIB5, or comprises SIB1, SIB2, SIB3, and SIB4, and
the determining that the system message fails to be read this time comprises:
reading SIB1 for a first specified quantity of times, and determining that decoding on SIB1 read at the first time fails, and combined decoding on SIB1 read at each subsequent time and previously read SIB1 fails; or
when the system message comprises SIB5, reading SIB2, SIB3, SIB4, and SIB5 for a second specified quantity of times, and determining that decoding on SIB2, SIB3, SIB4, and SIB5 read at the first time fails, and combined decoding on SIB2, SIB3, SIB4, and SIB5 read at each subsequent time and previously read SIB2, SIB3, SIB4, and SIB5 fails; or
when the system message does not comprise SIB5, reading SIB2, SIB3, and SIB4 for a third specified quantity of times, and determining that decoding on SIB2, SIB3, and SIB4 read at the first time fails, and combined decoding on SIB2, SIB3, and SIB4 read at each subsequent time and previously read SIB2, SIB3, and SIB4 fails.

7. A terminal device, comprising:
a processing unit (601), configured to: receive, after performing a network synchronization with a network side, downlink control information, DCI, sent by a base station, and decode the received DCI; and
a determining unit (602), configured to determine, according to (i) a result of decoding the DCI by the processing unit (601) and (ii) a first condition to read a system message sent by the base station;
wherein the result of decoding the DCI is that (i) the DCI has been successfully decoded; and
wherein the first condition is that:
(ii) it is determined that resource scheduling information obtained by decoding the DCI comprises a P-RNTI, and the terminal device determines, after receiving a paging message based on the P-RNTI and successfully decoding the paging message, that the decoded paging message comprises a device identifier of the terminal device.

8. The terminal device according to claim 7, wherein the processing unit (601) is further configured to:
if the determining unit (602) fails to decode the paging message, receive next DCI sent by the base station.

9. The terminal device according to claim 7, wherein when receiving the next DCI sent by the base station, the processing unit is configured to:
receive the DCI sent by the base station in a next discontinuous reception DRX period.

10. The terminal device according to claim 7, wherein the determining unit (602) is further configured to:
after determining to read the system message sent by the base station, read a system message that is sent by the base station and whose change period is 5.12 seconds.

11. The terminal device according to claim 7, wherein the determining unit (602) is further configured to:
after determining to read the system message sent by the base station, read the system message sent by the base station, wherein the reading comprises:
reading the system message sent by the base station once, and when determining that the system message fails to be read this time, triggering next reading of the system message sent by the base station.

12. The terminal device according to claim 11, wherein the determining unit (602) is configured to:
read a system message that is sent by the base station and comprises system information blocks SIB1, SIB2, SIB3, SIB4, and SIB5, or read a system message that is sent by the base station and comprises SIB1, SIB2, SIB3, and SIB4, and
when determining that the system message fails to be read this time, the determining unit (602) is configured to:
read SIB1 for a first specified quantity of times, and determine that decoding on SIB1 read at the first time fails, and combined decoding on SIB1 read at each subsequent time and previously read SIB 1 fails; or
when the system message comprises SIB5, read SIB2, SIB3, SIB4, and SIB5 for a second specified quantity of times, and determine that decoding on SIB2, SIB3, SIB4, and SIB5 read at the first time fails, and combined decoding on SIB2, SIB3, SIB4, and SIB5 read at each subsequent time and previously read SIB2, SIB3, SIB4, and SIB5 fails; or
when the system message does not comprise SIB5, read SIB2, SIB3, and SIB4 for a third specified quantity of times, and determine that decoding on SIB2, SIB3, and SIB4 read at the first time fails, and combined decoding on SIB2, SIB3, and SIB4 read at each subsequent time and previously read SIB2, SIB3, and SIB4 fails.

13. A computer readable medium comprising a computer program stored in a non-transitory medium that, when executed by a computer unit, causes the computer unit to perform the method of any of claims 1 to 6.

## Patentansprüche

1. Verfahren zum Bestimmen einer Systemmeldungserfassung, das Folgendes umfasst:
Empfangen (101), durch ein Endgerät nach Durchführen einer Netzwerksynchronisierung mit einer Netzwerkseite, von Downlink-Steuerinformationen (DCI), die von einer Basisstation gesendet werden, und Decodieren der empfangenen DCI; und
Bestimmen (102), durch das Endgerät gemäß (i), eines Ergebnisses des Decodierens der DCI, und (ii), einer ersten Bedingung zum Lesen einer von der Basisstation gesendeten Systemmeldung;
wobei das Ergebnis des Decodierens der DCI darin besteht, dass (i) die DCI erfolgreich decodiert worden sind; und
wobei die erste Bedingung darin besteht, dass: (ii) bestimmt wird, dass durch Decodieren der DCI erhaltene Ressourcenplanungsinformationen eine P-RNTI enthalten, und das Endgerät bestimmt, dass, nach Empfangen einer Paging-Nachricht auf der Basis der P-RNTI und erfolgreichem Decodieren der Paging-Nachricht, die decodierte Paging-Nachricht eine Gerätekennung des Endgerätes enthält.

2. Verfahren gemäß Anspruch 1, wobei das Verfahren ferner Folgendes umfasst:
falls das Endgerät die Paging-Nachricht nicht decodiert, Empfangen, durch das Endgerät, der nächsten von der Basisstation gesendeten DCI.

3. Verfahren gemäß Anspruch 2, wobei die DCI in einer nächsten diskontinuierlichen Empfangsperiode (DRX) von der Basisstation gesendet wird.

4. Verfahren gemäß Anspruch 1, wobei nach dem Bestimmen, durch das Endgerät, die von der Basisstation gesendete Systemmeldung zu lesen, das Verfahren ferner Folgendes umfasst:
Lesen einer Systemmeldung, die von der Basisstation gesendet wird, und deren Änderungsperiode 5,12 Sekunden beträgt.

5. Verfahren gemäß Anspruch 1, wobei nach dem Bestimmen, durch das Endgerät, die von der Basisstation gesendete Systemmeldung zu lesen, das Verfahren ferner Folgendes umfasst: Lesen der von der Basisstation gesendeten Systemmeldung, umfassend:
einmaliges Lesen der von der Basisstation gesendeten Systemmeldung, und wenn bestimmt wird, dass die Systemmeldung dieses Mal nicht gelesen wird, Auslösen des nächsten Lesens der von der Basisstation gesendeten Systemmeldung.

6. Verfahren gemäß Anspruch 5, wobei die Systemmeldung die Systeminformationsblöcke SIB1, SIB2, SIB3, SIB4 und SIB5, oder SIB1, SIB2, SIB3 und SIB4 enthält, und
das Bestimmen, dass die Systemmeldung dieses Mal nicht gelesen wird, Folgendes umfasst:
Lesen von SIB1 für eine erste angegebene Anzahl von Malen, und Bestimmen, dass Decodieren an dem beim ersten Mal gelesenen SIB1 fehlschlägt, und kombiniertes Decodieren an dem bei jedem nachfolgenden Mal gelesenen SIB1 und dem vorher gelesenen SIB1 fehlschlägt; oder
wenn die Systemmeldung SIB5 enthält, Lesen von SIB2, SIB3, SIB4 und SIB5 für eine zweite angegebene Anzahl von Malen, und Bestimmen, dass Decodieren an dem beim ersten Mal gelesenen SIB2, SIB3, SIB4 und SIB5 fehlschlägt, und kombiniertes Decodieren an dem bei jedem nachfolgenden Mal gelesenen SIB2, SIB3, SIB4 und SIB5 und dem vorher gelesenen SIB2, SIB3, SIB4 und SIB5 fehlschlägt; oder
wenn die Systemmeldung SIB5 nicht enthält, Lesen von SIB2, SIB3 und SIB4 für eine dritte angegebene Anzahl von Malen, und Bestimmen, dass Decodieren an dem beim ersten Mal gelesenen SIB2, SIB3 und SIB4 fehlschlägt, und kombiniertes Decodieren an dem bei jedem nachfolgenden Mal gelesenen SIB2, SIB3 und SIB4 und dem vorher gelesenen SIB2, SIB3 und SIB4 fehlschlägt; oder

7. Endgerät, das Folgendes umfasst:
eine Verarbeitungseinheit (601), die für Folgendes ausgelegt ist: Empfangen, nach Durchführen einer Netzwerksynchronisierung mit einer Netzwerkseite, von Downlink-Steuerinformationen (DCI), die von einer Basisstation gesendet werden, und Decodieren der empfangenen DCI; und
eine Bestimmungseinheit (602), die dazu ausgelegt ist, gemäß (i), ein Ergebnis des Decodierens der DCI durch die Verarbeitungseinheit (601), und (ii), eine erste Bedingung zum Lesen einer von der Basisstation gesendeten Systemmeldung zu bestimmen;
wobei das Ergebnis des Decodierens der DCI darin besteht, dass (i) die DCI erfolgreich decodiert worden sind; und
wobei die erste Bedingung darin besteht, dass: (ii) bestimmt wird, dass durch Decodieren der DCI die erhaltenen Ressourcenplanungsinformationen eine P-RNTI enthalten, und das Endgerät bestimmt, dass, nach Empfangen einer Paging-Nachricht auf der Basis der P-RNTI und erfolgreichem Decodieren der Paging-Nachricht, die decodierte Paging-Nachricht eine Gerätekennung des Endgerätes enthält.

8. Endgerät gemäß Anspruch 7, wobei die Verarbeitungseinheit (601) ferner für Folgendes ausgelegt ist:
falls die Bestimmungseinheit (602) die Paging-Nachricht nicht decodiert, Empfangen der nächsten von der Basisstation gesendeten DCI.

9. Endgerät gemäß Anspruch 7, wobei, wenn die nächste von der Basisstation gesendete DCI empfangen wird, die Verarbeitungseinheit für Folgendes ausgelegt ist:
Empfangen der von der Basisstation gesendeten DCI in einer nächsten diskontinuierlichen Empfangsperiode (DRX).

10. Endgerät gemäß Anspruch 7, wobei die Bestimmungseinheit (602) ferner für Folgendes ausgelegt ist:
nach dem Bestimmen, die von der Basisstation gesendete Systemmeldung zu lesen, Lesen einer Systemmeldung, die von der Basisstation gesendet wird, und deren Änderungsperiode 5,12 Sekunden beträgt.

11. Endgerät gemäß Anspruch 7, wobei die Bestimmungseinheit (602) ferner für Folgendes ausgelegt ist:
nach dem Bestimmen, die von der Basisstation gesendete Systemmeldung zu lesen, Lesen der von der Basisstation gesendeten Systemmeldung, wobei das Lesen Folgendes umfasst:
einmaliges Lesen der von der Basisstation gesendeten Systemmeldung, und wenn bestimmt wird, dass die Systemmeldung dieses Mal nicht gelesen wird, Auslösen des nächsten Lesens der von der Basisstation gesendeten Systemmeldung.

12. Endgerät gemäß Anspruch 11, wobei die Bestimmungseinheit (602) für Folgendes ausgelegt ist:
Lesen einer Systemmeldung, die von der Basisstation gesendet wird und die Systeminformationsblöcke SIB1, SIB2, SIB3, SIB4 und SIB5 enthält, oder Lesen einer Systemmeldung, die von der Basisstation gesendet wird und SIB1, SIB2, SIB3 und SIB4 enthält, und
wenn bestimmt wird, dass die Systemmeldung dieses Mal nicht gelesen wird, die Bestimmungseinheit (602) für Folgendes ausgelegt ist:
Lesen von SIB1 für eine erste angegebene Anzahl von Malen, und Bestimmen, dass Decodieren an dem beim ersten Mal gelesenen SIB1 fehlschlägt, und kombiniertes Decodieren an dem bei jedem nachfolgenden Mal gelesenen SIB1 und dem vorher gelesenen SIB1 fehlschlägt; oder
wenn die Systemmeldung SIB5 enthält, Lesen von SIB2, SIB3, SIB4 und SIB5 für eine zweite angegebene Anzahl von Malen, und Bestimmen, dass Decodieren an dem beim ersten Mal gelesenen SIB2, SIB3, SIB4 und SIB5 fehlschlägt, und kombiniertes Decodieren an dem bei jedem nachfolgenden Mal gelesenen SIB2, SIB3, SIB4 und SIB5 und dem vorher gelesenen SIB2, SIB3, SIB4 und SIB5 fehlschlägt; oder
wenn die Systemmeldung SIB5 nicht enthält, Lesen von SIB2, SIB3 und SIB4 für eine dritte angegebene Anzahl von Malen, und Bestimmen, dass Decodieren an dem beim ersten Mal gelesenen SIB2, SIB3 und SIB4 fehlschlägt, und kombiniertes Decodieren an dem bei jedem nachfolgenden Mal gelesenen SIB2, SIB3 und SIB4 und dem vorher gelesenen SIB2, SIB3 und SIB4 fehlschlägt.

13. Computerlesbares Medium, das ein in einem nichtflüchtigen Medium gespeichertes Computerprogramm enthält, das, wenn es durch eine Rechnereinheit ausgeführt wird, die Rechnereinheit veranlasst, das Verfahren nach einem der Ansprüche 1 bis 6 durchzuführen.

## Revendications

1. Procédé de détermination d'une acquisition de message de système, consistant à :
recevoir (101), par un dispositif terminal après la réalisation d'une synchronisation de réseau avec un côté réseau, une information de contrôle en liaison descendante, DCI, envoyée par une station de base, et décoder la DCI reçue ; et
déterminer (102), par le dispositif terminal, selon (i) un résultat du décodage de la DCI et (ii) une première condition, qu'il faut lire un message de système envoyé par la station de base ;
le résultat du décodage de la DCI étant que (i) la DCI a été décodée de manière satisfaisante ; et
la première condition étant que :
(ii) il est déterminé qu'une information de planification de ressource obtenue en décodant la DCI comprend un P-RNTI, et le dispositif terminal détermine, après la réception d'un message de radiorecherche sur la base du P-RNTI et le décodage satisfaisant du message de radiorecherche, que le message de radiorecherche décodé comprend un identifiant de dispositif du dispositif terminal.

2. Procédé selon la revendication 1, le procédé consistant en outre à :
si le dispositif terminal échoue à décoder le message de radiorecherche, recevoir, par le dispositif terminal, une DCI suivante envoyée par la station de base.

3. Procédé selon la revendication 2, dans lequel la DCI est envoyée par la station de base dans une période de réception discontinue, DRX, suivante.

4. Procédé selon la revendication 1, le procédé consistant en outre, après la détermination, par le dispositif terminal, qu'il faut lire le message de système envoyé par la station de base, à :
lire un message de système envoyé par la station de base et dont la période de changement est de 5,12 secondes.

5. Procédé selon la revendication 1, le procédé consistant en outre, après la détermination, par le dispositif terminal, qu'il faut lire le message de système envoyé par la station de base, à : lire le message de système envoyé par la station de base, consistant à :
lire une fois le message de système envoyé par la station de base, et quand il est déterminé que le message de système échoue à être lu cette fois, déclencher une lecture suivante du message de système envoyé par la station de base.

6. Procédé selon la revendication 5, dans lequel le message de système comprend des blocs d'information de système SIB1, SIB2, SIB3, SIB4 et SIB5, ou comprend SIB1, SIB2, SIB3 et SIB4, et
la détermination que le message de système échoue à être lu cette fois consiste à : lire SIB1 un premier nombre spécifié de fois, et déterminer que le décodage sur SIB1 lu la première fois échoue, et que le décodage combiné sur SIB1 lu chaque fois ultérieure et sur SIB1 lu précédemment échoue ; ou
quand le message de système comprend SIB5, lire SIB2, SIB3, SIB4 et SIB5 un deuxième nombre spécifié de fois, et déterminer que le décodage sur SIB2, SIB3, SIB4 et SIB5 lus la première fois échoue, et que le décodage combiné sur SIB2, SIB3, SIB4 et SIB5 lus chaque fois ultérieure et sur SIB2, SIB3, SIB4 et SIB5 lus précédemment échoue ; ou
quand le message de système ne comprend pas SIB5, lire SIB2, SIB3 et SIB4 un troisième nombre spécifié de fois, et déterminer que le décodage sur SIB2, SIB3 et SIB4 lus la première fois échoue, et que le décodage combiné sur SIB2, SIB3 et SIB4 lus chaque fois ultérieure et sur SIB2, SIB3 et SIB4 lus précédemment échoue.

7. Dispositif terminal, comprenant :
une unité de traitement (601), configurée pour : recevoir, après la réalisation d'une synchronisation de réseau avec un côté réseau, une information de contrôle en liaison descendante, DCI, envoyée par une station de base, et décoder la DCI reçue ; et
une unité de détermination (602), configurée pour déterminer, selon (i) un résultat du décodage de la DCI par l'unité de traitement (601) et (ii) une première condition, qu'il faut lire un message de système envoyé par la station de base ;
le résultat du décodage de la DCI étant que (i) la DCI a été décodée de manière satisfaisante ; et
la première condition étant que :
(ii) il est déterminé qu'une information de planification de ressource obtenue en décodant la DCI comprend un P-RNTI, et le dispositif terminal détermine, après la réception d'un message de radiorecherche sur la base du P-RNTI et le décodage satisfaisant du message de radiorecherche, que le message de radiorecherche décodé comprend un identifiant de dispositif du dispositif terminal.

8. Dispositif terminal selon la revendication 7, dans lequel l'unité de traitement (601) est en outre configurée pour :
si l'unité de détermination (602) échoue à décoder le message de radiorecherche, recevoir une DCI suivante envoyée par la station de base.

9. Dispositif terminal selon la revendication 7, dans lequel, lors de la réception de la DCI suivante envoyée par la station de base, l'unité de traitement est configurée pour :
recevoir la DCI envoyée par la station de base dans une période de réception discontinue, DRX, suivante.

10. Dispositif terminal selon la revendication 7, dans lequel l'unité de détermination (602) est en outre configurée pour :
après la détermination qu'il faut lire le message de système envoyé par la station de base, lire un message de système envoyé par la station de base et dont la période de changement est de 5,12 secondes.

11. Dispositif terminal selon la revendication 7, dans lequel l'unité de détermination (602) est en outre configurée pour :
après la détermination qu'il faut lire le message de système envoyé par la station de base, lire le message de système envoyé par la station de base, la lecture consistant à :
lire une fois le message de système envoyé par la station de base, et quand il est déterminé que le message de système échoue à être lu cette fois, déclencher une lecture suivante du message de système envoyé par la station de base.

12. Dispositif terminal selon la revendication 11, dans lequel l'unité de détermination (602) est configurée pour :
lire un message de système envoyé par la station de base et comprenant des blocs d'information de système SIB1, SIB2, SIB3, SIB4 et SIB5, ou lire un message de système envoyé par la station de base et comprenant SIB1, SIB2, SIB3 et SIB4, et
quand il est déterminé que le message de système échoue à être lu cette fois, l'unité de détermination (602) est configurée pour :
lire SIB1 un premier nombre spécifié de fois, et déterminer que le décodage sur SIB1 lu la première fois échoue, et que le décodage combiné sur SIB1 lu chaque fois ultérieure et sur SIB1 lu précédemment échoue ; ou
quand le message de système comprend SIB5, lire SIB2, SIB3, SIB4 et SIB5 un deuxième nombre spécifié de fois, et déterminer que le décodage sur SIB2, SIB3, SIB4 et SIB5 lus la première fois échoue, et que le décodage combiné sur SIB2, SIB3, SIB4 et SIB5 lus chaque fois ultérieure et sur SIB2, SIB3, SIB4 et SIB5 lus précédemment échoue ; ou
quand le message de système ne comprend pas SIB5, lire SIB2, SIB3 et SIB4 un troisième nombre spécifié de fois, et déterminer que le décodage sur SIB2, SIB3 et SIB4 lus la première fois échoue, et que le décodage combiné sur SIB2, SIB3 et SIB4 lus chaque fois ultérieure et sur SIB2, SIB3 et SIB4 lus précédemment échoue.

13. Support lisible par ordinateur comprenant un programme informatique stocké sur un support non transitoire et qui, lorsqu'il est exécuté par une unité informatique, amène l'unité informatique à réaliser le procédé selon l'une quelconque des revendications 1 à 6.
